# EUROPÄISCHE PATENTANMELDUNG

(11) **EP 4 659 919 A1**
(43) Veröffentlichungstag der Anmeldung: **10.12.2025**
(21) Anmeldenummer: 25180380.5
(22) Anmeldetag: 03.06.2025
(51) Int. Cl.: B26D 7/26, B23D 21/06, B26D 1/28, B26D 3/00, B26D 3/08, B26D 3/16, B26D 3/28, B26D 5/10, B26D 7/22, B26D 1/00, H02G 1/12

(54) **VORRICHTUNG ZUM AUFSCHNEIDEN VON SCHUTZMANTELROHREN**

(30) Priorität: 05.06.2024 DE 102024115598
(71) Anmelder: ArmEx Solutions GmbH, 22844 Norderstedt (DE)
(72) Erfinder: Siemsen, Richard, 22926 Siek (DE)
(74) Vertreter: Jaeschke, Rainer

(57) **Zusammenfassung**

Die Erfindung betrifft eine Vorrichtung zum Aufschneiden von Schutzmantelrohren, welche Vorrichtung einen Messerhalter umfasst, an dem ein Messer gehalten ist und der an dem freien Ende eines Messerarms gehalten ist, an dessen anderen Ende ein verzahntes Antriebsrad drehbar gelagert ist, das in der Gebrauchslage auf dem Schutzmantelrohr aufliegt derart, dass die Zähne des Antriebsrads in das Material des Schutzmantels eingreifen, welches Antriebsrad um seine Drehachse mit einem Hebel verdrehbar ist, um den Messerhalter entlang der Oberfläche des Schutzmantelrohrs zu bewegen, so dass das Messer den Schutzmantel entlang dem Umfang oder in axialer Richtung aufschneidet. Gemäß der Erfindung wird vorgeschlagen, dass an dem Messerhalter zwei beabstandete und parallele Messer vorhanden sind, die im Zuge der Bewegung der Vorrichtung auf dem Schutzmantelrohr einen Streifen aus dem Schutzmantel herausschneiden.

## Beschreibung

Die Erfindung betrifft eine Vorrichtung zum Aufschneiden von Schutzmantelrohren, welche Vorrichtung einen Messerhalter umfasst, an dem ein Messer gehalten ist und der an dem freien Ende eines Messerarms gehalten ist, an dessen anderen Ende ein verzahntes Antriebsrad drehbar gelagert ist, das in der Gebrauchslage auf dem Schutzmantelrohr aufliegt derart, dass die Zähne des Antriebsrads in das Material des Schutzmantels eingreifen, welches Antriebsrad um seine Drehachse mit einem Hebel verdrehbar ist, um den Messerhalter entlang der Oberfläche des Schutzmantelrohrs zu bewegen, so dass das Messer den Schutzmantel entlang dem Umfang oder in axialer Richtung aufschneidet. Für einen Schnitt in Umfangsrichtung verläuft die Drehachse somit parallel zur Rohrachse. Für einen Schnitt in axialer Richtung beziehungsweise entlang einer Mantellinie verläuft die Drehachse senkrecht zur Rohrachse.

Insbesondere betrifft die Erfindung eine Vorrichtung zum Aufschneiden eines Schutzmantelrohrs eines Fernwärmerohrs. Vorisolierte Fernwärmerohre weisen ein Innenrohr oder Leitungsrohr aus Metall, beispielsweise aus Stahl, Kupfer oder Messing auf, das von einer Polyurethan-Schicht umgeben ist, die ihrerseits von einem Schutzmantelrohr aus Kunststoff, beispielsweise aus Polyethylen, umhüllt ist. Bei Arbeiten an verlegten Rohren oder zum Verlegen der Rohre müssen die freien Enden der Stahlrohre von der Isolationsschicht vollständig befreit werden, damit die verwendeten Rohrfittings zum Verbinden zweier Rohrenden oder zum Einsetzen von Anschlussstücken dicht mit den Rohrenden verbunden werden können. Dazu ist es auch erforderlich, das Schutzmantelrohr in diesem Bereich zu entfernen oder aufzuschneiden. Grundsätzlich können in einem Fernwärmerohr auch zwei oder mehrere Leitungsrohre oder Innenrohre parallel nebeneinander verlaufen.

Häufig verlaufen in der Polyurethan-Schicht auch Signalleitungen, um eventuelle Leckstellen detektieren zu können. Es wäre daher günstig, wenn diese Leitungen beim Freilegen des Leitungsrohrs nicht durchtrennt werden würden.

Es sind Rohrsägen bekannt, die ein Rohr nur entlang dem Umfang oder in axialer Richtung in einer geringen Tiefe aufschneiden. Eine derartige Rohrsäge ist beispielsweise aus der EP 1 628 797 B1 bekannt. Es wird eine Kreissäge mit einer Haltevorrichtung am aufzutrennenden Rohr gehalten. Die Kreissäge wird mit ihrem Handgriff um das Rohr geführt. Dabei sägt die Kreissäge die Rohrwandung durch, und es wird ein ebener Schnitt senkrecht zur Rohrachse erzeugt. Der Griff ragt jedoch radial weit nach außen, so dass ein Arbeiten unter beengten Raumverhältnissen, beispielsweise in einer Baugrube, oder bei nebeneinander verlaufenden Rohrleitungen nicht oder nur schwer möglich ist.

Aus der EP 0 610 841 B1 ist ein Kabelschneider bekannt, bei dem die Kunststoffummantelung des Kabels mit einem Messer aufgeschnitten wird, das mit einem verzahnten Hebel entlang dem Umfang oder in axialer Richtung auf der Kabeloberfläche bewegt wird. Der Messerhalter weist eine aufwändige Kontur auf, damit dieser sicher auf dem Kabel geführt wird und das Messer bei einer Bewegung sowohl in axialer Richtung als auch entlang dem Umfang gut in die Ummantelung einschneidet. Der Messerhalter wird über eine Lasche von dem verzahnten Hebel gezogen und ist wegen der dem Kabel zugewandten Kontur nur für einen Kabeldurchmesser geeignet.

Das Kunststoffmaterial des Schutzmantels eines Fernwärmerohrs weist eine relativ geringe Schnittfestigkeit auf. Es hat sich gezeigt, dass ein solcher Schutzmantel mit einem Messer, beispielsweise mit einem Teppichmesser oder Cuttermesser gut aufgeschnitten werden kann. Dadurch werden auch Sägespäne vermieden.

Allerdings reicht ein einfacher Schnitt mit einem Messer nicht aus, einen ausreichenden Freiraum für eine anschließend anzusetzende grobe Säge zum Durchschneiden der Isolationsschicht bis zu dem Leitungsrohr zu schaffen. Auch ist der vorbekannte Kabelschneider nicht für das Aufschneiden von Schutzmantelrohren von Fernwärmerohren mit unterschiedlichen Außendurchmessern geeignet. Durch die der Kunststoffummantelung zugewandte Kontur des Messerhalters liegt dieser nur bei einem bestimmten Durchmesser sicher auf der Oberfläche auf. Bei größeren Durchmessern reicht das Messer nicht auf Manteloberfläche, bei kleineren Durchmessern wird der Messerhalter nicht mehr richtig auf der Manteloberfläche geführt.

Der Erfindung liegt die Aufgabe zugrunde, eine Vorrichtung der eingangs geschilderten Art so auszubilden, dass ein Schutzmantelrohr entsprechend den Anforderungen bei Fernwärmerohren aufgeschnitten werden kann. Insbesondere soll die Vorrichtung auch bei unterschiedlichen Rohrdurchmessern eingesetzt werden können.

Die Aufgabe wird gemäß der Erfindung dadurch gelöst, dass an dem Messerhalter zwei beabstandete und parallele Messer vorhanden sind, die im Zuge der Bewegung der Vorrichtung auf dem Schutzmantelrohr einen Streifen aus dem Schutzmantel herausschneiden. Dies hat den Vorteil, dass in einem Arbeitsschritt eine relativ breite Fläche entlang dem Umfang oder entlang der Mantellinie freigelegt wird. Die Messer verlaufen demnach in einer Richtung parallel zur Drehachse des Antriebsrads in einem axialen Abstand zueinander. Der so abgetrennte Streifen des Schutzmantels kann in einfacher Weise durch einen Schnitt in dessen Breitenrichtung manuell aufgetrennt und entfernt werden. Es liegt dann ein ausreichend breiter Bereich der Isolationsschicht frei, in dem die Säge oder das Messer zum Durchtrennen der Isolationsschicht angesetzt werden kann. Der Abstand der Messer und somit die Breite des freigelegten Bereichs kann zwischen 0,2 cm und 2 cm oder 0,5 cm und 1 cm betragen.

Weiterhin ist es günstig, wenn der Messerhalter um eine parallel zur Drehachse des Antriebsrads verlaufende Schwenkachse verschwenkbar am Messerarm gehalten ist. Dadurch kann der Eingriffswinkel des Messers zur Schutzmanteloberfläche verändert werden, damit das Messer selbsttätig in das Material eindringt und dieses durchtrennt. Die Schwenkachse verläuft somit senkrecht zur Bewegungsrichtung des Messerhalters und parallel zur Rohrachse bei einem Schnitt in Umfangsrichtung beziehungsweise senkrecht zur Rohrachse bei einem Schnitt in axialer Richtung.

Insbesondere ist es durch diese Maßnahme möglich, die Vorrichtung an verschiedene Außendurchmesser des Schutzmantelrohrs anzupassen. Der erforderliche oder günstige Winkel der Messerschneide relativ zu der Tangente am Eindringpunkt hängt auch ab vom Außendurchmesser des aufzuschneidenden Schutzmantelrohrs. Bei einem zu steilen oder zu flachen Winkel kann die Messerspitze nicht sicher in das Material eindringen oder rutscht im Zuge der Bewegung wieder aus dem Material heraus.

Die Vorrichtung kann ferner durch unterschiedlich lange Messerarme an verschiedene Außendurchmesserbereiche angepasst werden. Bei größeren Außendurchmessern wird ein längerer Messerarm benötigt als bei kleineren Außendurchmessern. Es hat sich gezeigt, dass für einen Außendurchmesserbereich zwischen 80 mm und 350 mmm ein Messerarm ausreicht, der eine Lagerung der Drehachse und der Schwenkachse in einem Abstand von etwa 90 mm bis 130 mm erlaubt. Bei größeren Außendurchmesserbereichen von bis zu 700 mm, 800 mm oder 900 mm ist ein längerer Messerarm zweckmäßig. Tatsächlich ist für ein sicheres erstes Eindringen des Messers in den Schutzmantel auch der Abstand der Messerspitze zum Auflagepunkt der Antriebsräder maßgebend. Dieser Abstand kann für verschiedene Außendurchmesserbereiche durch einen entsprechend langen Messerarm variiert werden. In jedem Fall ist es günstig, wenn der Messerarm auf seiner dem Schutzmantelrohr zugekehrten Seite zumindest zwischen der Drehachse und dem Messerhalter konkav gewölbt ist, damit der Messerarm nicht auf dem Schutzmantel aufliegt.

Die Einstellbarkeit des Messerhalters kann auch bei der Verwendung nur eines Messers zweckmäßig sein, und der Messerhalter ist dann um eine parallel zur Drehachse des Antriebsrads verlaufende Schwenkachse verschwenkbar am Messerarm gehalten. Günstig ist es aber, wenn an dem Messerhalter zwei beabstandete und parallele Messer vorhanden sind, die im Zuge der Bewegung der Vorrichtung auf dem Schutzmantelrohr einen Streifen aus dem Schutzmantel herausschneiden.

Gemäß einer vorteilhaften Ausführungsform der Erfindung ist vorgesehen, dass das oder die Messer als Hakenklinge ausgebildet ist beziehungsweise sind, deren hakenförmige Messerspitze in der montierten Gebrauchslage in Richtung auf das Antriebsrad weist. Eine solche Hakenklinge ist allgemein bekannt und weist standardisierte Abmessungen auf. Sie bedarf daher weiteren Erläuterung. Weiterhin ist sie sehr scharf und kann gut in das Kunststoffmaterial eindringen. Im Zuge der Bewegung des Messers entlang dem Umfang oder der Mantellinie bleibt die Klinge stets im Eingriff mit dem Schutzmantel und schneidet diesen sicher durch. Schließlich weist eine solche handelsübliche Hakenklinge Ausklinkungen und Durchbrechungen auf, mit denen sie an dem Messerhalter sicher und formschlüssig gehalten werden kann. Auch ist ein Austausch verschlissener Hakenklingen in einfacher und kostengünstiger Weise möglich.

Weiterhin ist es zweckmäßig, dass zwei gleichartige Antriebsräder parallel und mit einem Abstand zueinander auf der Drehachse angeordnet sind. Hierdurch wird oder werden die Messer in einem 90°-Winkel zur Oberfläche geführt, und ein Verklemmen oder Abwinkeln des Messers oder der Messer wird zuverlässig vermieden. Durch das dadurch gebildete breite Auflager wird zudem die Bedienung der Vorrichtung mit dem Hebel sicherer einfacher. Insbesondere kann ein ebener Schnitt senkrecht zur Mantelrohrachse einfacher durchgeführt werden.

Es kann vorgesehen werden, dass die Drehachse zumindest in dem Bereich des Antriebsrades oder der Antriebsräder einen Vierkant-Querschnitt aufweist, und das Antriebsrad beziehungsweise die Antriebsräder drehfest mit der Drehachse verbunden ist beziehungsweise sind. An der Drehachse greift auch der Hebel an, so dass die Antriebsräder verdreht und die Vorrichtung dadurch gut über die Oberfläche bewegt werden kann.

Besonders vorteilhaft ist es, wenn der Hebel als Durchsteckratsche ausgebildet ist, dass der Ratschenkopf zwischen den Antriebrädern verläuft, und dass sich der Bereich der Drehachse mit dem Vierkant-Querschnitt von der Außenseite des einen Antriebsrads bis zur Außenseite des anderen Antriebsrads erstreckt. Durch die Hebelbewegung der Ratsche in Richtung auf das Mantelrohr werden die Zähne der Antriebsräder fest in das Kunststoffmaterial gedrückt, so dass diese nicht durchdrehen, sondern die Vorrichtung sicher auf der Mantelrohroberfläche bewegen, um dessen Rohrwandung mit dem Messer zu durchtrennen. Günstig ist es hierbei, wenn die Zähne des Antriebsrads oder der Antriebsräder entsprechend den Zähnen eines Kreissägeblatts ausgebildet sind.

Gemäß einer Ausführungsform der Erfindung ist vorgesehen, dass der Messerarm zwei zumindest bereichsweise parallel zueinander verlaufende Teilarme aufweist, die in der montierten Lage den Messerhalter zwischen sich einschließen. Dadurch wird die Montage der Vorrichtung erleichtert. Der Messerhalter kann exzentrisch zur Schwenkachse angeordnete Durchbrechungen oder Vorsprünge aufweisen, um den Messerhalter in einer vorbestimmbaren Winkellage zum Messerarm zu arretieren. Zum Verändern der Winkellage werden die Teilarme voneinander gelöst, und der Messerhalter kann versetzt werden. Bei voneinander gelösten Teilarmen sind zudem die Hakenklingen der Messer frei zugänglich und können ausgetauscht werden.

Weiterhin ist es zweckmäßig, wenn die Teilarme in der montierten Lage das Antriebsrad beziehungsweise die Antriebsräder zwischen sich einschließen. Dadurch werden zum einen die Antriebsräder in axialer Richtung auf der Drehachse fixiert. Auch wird der sich zwischen den Antriebsrädern befindliche Hebel axial gehalten.

Gemäß einer weitergehenden Ausführungsform der Erfindung ist der Messerarm beziehungsweise dessen zusammengesetzte Teilarme haubenförmig ausgebildet und überdecken in der montierten Lage den Messerhalter und die Antriebsräder zumindest bereichsweise und zumindest von oben. Damit werden die beweglichen Teile gut geschützt und Arbeitsunfälle werden vermieden.

Die Erfindung wird im Folgenden anhand der schematischen Zeichnung näher erläutert. Es zeigen:
- Fig. 1: die Seitenansicht auf die Vorrichtung gemäß der Erfindung,
- Fig. 2: eine perspektivische Ansicht der Vorrichtung bei geöffnetem Messerarm, und
- Fig. 3: die Seitenansicht auf den Messerhalter in vergrößerter Darstellungsform.

Die in der Zeichnung dargestellte Vorrichtung zum Aufschneiden von Schutzmantelrohren von Fernwärmeleitungen weist einen Messerhalter 11 auf, der an dem vorderen Ende 12 eines Messerarms 13 angeordnet ist. An seinem anderen Ende 14 weist der Messerarm 13 wenigstens ein verzahntes Antriebsrad 15 auf. Das Antriebsrad 15 ist über eine Drehachse 16 um eine Drehachse drehbar am Messerarm 13 gelagert.

Das Antriebsrad 15 liegt mit seinen Zähnen 17 in der Gebrauchslage auf der Schutzmantelrohroberfläche auf und kann dort abrollen. Das Antriebsrad 15 ist hierfür über einen Hebel 18 drehbar und die Vorrichtung dadurch antreibar. Der Hebel 18 kann als sogenannte Durchsteckratsche ausgebildet sein, deren Ratschenkopf 19 zwischen zwei parallelen Antriebsrädern 15 auf einem Vierkantabschnitt der Drehachse 16 gehalten ist. Durch Hin- und Herverschwenken des Hebels 18 können das Antriebsrad 15 beziehungsweise die Antriebsräder 15 verdreht werden, wodurch die Vorrichtung auf der Schutzmanteloberfläche abrollt. Die Zähne 17 der Antriebsräder greifen dabei in das Schutzmantelrohr ein und können sich dadurch gut abstützen und die Vorrichtung auf dem Schutzmantelrohr in Richtung des Pfeils 20 bewegen.

Die Antriebsräder 15 schließen den Ratschenkopf 19 zwischen sich ein und weisen eine quadratische zentrische Durchbrechung auf, über die sie drehfest auf dem Vierkantabschnitt der Drehachse 16 gehalten sind. Die Antriebsräder 15 und der Ratschenkopf 19 werden durch lösbare Klemmringe 21 in axialer Richtung auf der Drehachse 16 fixiert.

An dem Messerhalter 11 sind zwei in einem Abstand zueinander angeordnete parallele Messerklingen 22 vorhanden. Im Einzelnen ist die Anordnung so getroffen, dass der Messerhalter 11 scheibenförmig mit einer Bohrung 23 ausgebildet ist, über die der Messerhalter 11 um eine Schwenkachse 24 am Messerarm 13 gelagert ist. Die Messerklingen 22 sind als sogenannten Hakenklingen ausgebildet, die zwei gegenüberliegende hakenförmige Messerspitzen 25 aufweisen. Weiterhin weisen solche Hakenklingen 22 eine Durchbrechung 26 und auf ihrem den Messerspitzen 25 abgekehrten Rand Ausklinkungen 27 auf, über welche die Messerklingen sicher an einem entsprechend ausgebildeten Messerhalter gehalten werden können.

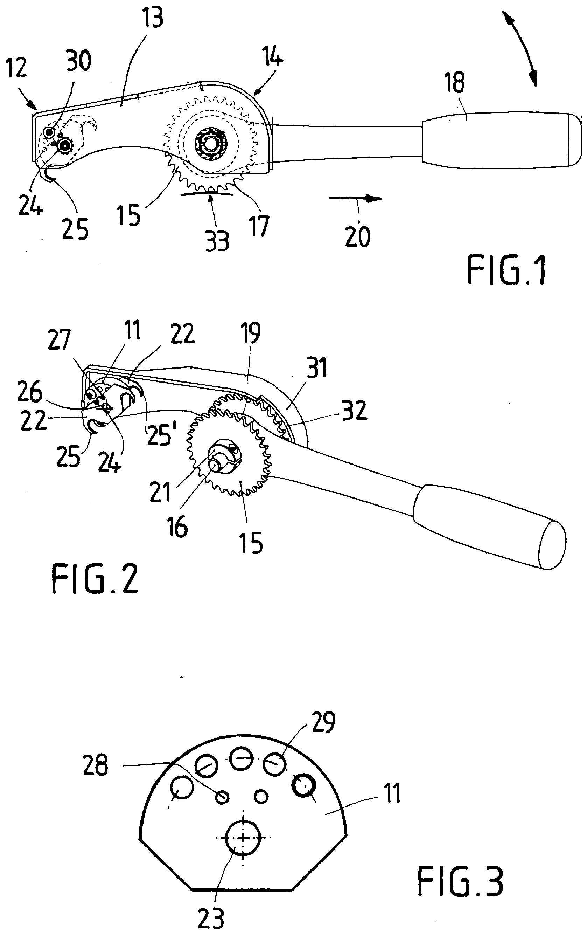

Diese standardisierte Ausbildung einer Hakenklinge 22 nutzt die Erfindung aus, und der Messerhalter kann entsprechende Vorsprünge oder Stifte aufweisen, die in der Gebrauchslage in die Ausklinkungen 27 eingreifen. Bei dem in Figur 3 dargestellten Ausführungsbeispiel sind Gewindebohrungen 28 vorgesehen, die entsprechend den Ausklinkungen 27 am Messerhalter 11 angeordnet sind, um die Klingen 22 mit dem Messerhalter verschrauben zu können.

Die Bohrung 23 des Messerhalters 11 stimmt mit der Durchbrechung 26 der Hakenklinge überein, so dass die Schwenkachse 24 die Bohrung 23 und die Durchbrechung 26 durchdringt und den Messerhalter 11 mit den Messern 22 sicher am Messerarm 13 hält. Die Messer 22 sind zudem in einfacher Weise austauschbar oder die gegenüberliegenden Messerspitzen 25' der beiden Messer 22 können durch Wenden verwendet werden.

Weiterhin weist der Messerhalter 11 mehrere Durchbrechungen 29 auf, die konzentrische zu der Durchbrechung 23 angeordnet sind. Bei dem in der Zeichnung dargestellten Ausführungsbeispiel sind fünf Durchbrechungen 29 vorhanden, die in einem Winkelabstand von 25° um die Durchbrechung 23 herum angeordnet sind. Die Durchbrechungen 29 können als Gewindebohrungen ausgebildet sein, um den Messerhalter 11 über Schrauben 30 am Messerarm 13 zu arretieren. Durch die gezeigte Anordnung können der Messerhalter 11 und somit die Messer 22 um 125° um die Schwenkachse 24 verschwenkt werden.

Der Messerarm 13 setzt sich aus zwei parallelen Teilarmen 31 zusammen, die spiegelbildlich ausgebildet sind und von denen nur einer in Figur 2 gezeigt ist. Im Einzelnen ist die Anordnung so getroffen, dass jeder Teilarm 31 schalenförmig ausgebildet ist derart, dass sie in der zusammengesetzten Gebrauchslage den Messerhalter 11 und die Antriebsräder 25 haubenförmig nach oben überdecken. Im Bereich des Schwenkbereichs des Hebels 18 weisen die Teilarme 31 eine entsprechende Ausklinkung 32 auf. Weiterhin ist der Messerarm 13 nach unten offen ausgebildet derart, dass zum einen die Antriebsräder auf der Schutzmantelrohr abrollen und zum anderen die Messer 22 beziehungsweise deren Messerspitzen 25 in Eingriff mit dem aufzuschneidenden Schutzmantel kommen können. Die Teilarme 31 des Messerarms 13 werden durch Achsmuttern auf der Drehachse 16 und der Schwenkachse 24 zusammengehalten.

In der Gebrauchslage liegt die Vorrichtung mit den Zähnen 17 der Antriebräder 15 auf der Schutzmanteloberfläche auf. Der Messerarm 13 ist auf der Drehachse 16 frei verschwenkbar gelagert, so dass das freie Ende 12 des Messerarms 13 in Richtung auf die Schutzmanteloberfläche verschwenkt werden kann, bis die Messerspitzen 25 der Messer 22 ebenfalls auf der Schutzmanteloberfläche aufliegen. Die Messerspitzen 25 sind dabei in Richtung auf die Antriebsräder 15 ausgerichtet.

In der Startposition befindet sich der Hebel 18 in einer nicht gezeigten oberen Lage. Durch Niederdrücken des Hebels werden zum einen die Zähne 17 der Antriebsräder in das relativ weiche Material des Schutzmantelrohrs gedrückt, so dass sie ausreichend Halt finden. Dadurch wird sich die Vorrichtung in Richtung des Pfeils 20 bewegen.

Die Messerspitzen 25 beziehungsweise die Hakenklingen der Messer 22 sind über den Messerhalter 11 und dessen Verschwenkungen um die Schwenkachse 24 so relativ zur Schutzmanteloberfläche eingestellt, dass die Messerspitzen 25 sicher in das Material des Schutzmantelrohrs eindringen und einschneiden. Im Zuge der fortscheitenden Bewegung der Vorrichtung durch mehrfaches Betätigen des Hebels 18 nach Art einer Ratsche wird das Messer 22 weiter durch den Schutzmantel gezogen und schneidet diesen auf. Die besondere Messerspitzengeometrie gewährleistet zum einen ein sicheres erstes Eindringen des Messers 22 und verhindert zum anderen ein Herausrutschen des Messers 22 aus der Schnittfuge.

Weiterhin wird ein zu tiefes Eindringen des Messers in das Fernwärmeleitungsrohr verhindert.

Der Anstellwinkel des Messers 22 zur Schutzmanteloberfläche hängt ab von dem Durchmesser des Schutzmantelrohrs und dem Abstand des Auflagebereichs 33 der Antriebsräder 15 zum Eingreifstelle der Messerspitzen 25.

Durch die zwei parallelen und gleich bemessenen und gleich ausgerichteten und gleichartigen Messer 22 wird in einem Arbeitszug ein Streifen entsprechend dem Messerabstand aus dem Schutzmantel geschnitten. Es liegt dann ein entsprechend breiter Bereich der Isolationsschicht frei, die mit an sich bekannten Sägen manuell weiter aufgeschnitten werden kann.

Durch die Wahl der Länge des Messerarms kann die Vorrichtung an verschiedene Rohrdurchmesserbereiche angepasst werden. Es ist günstig, wenn der dem Schutzmantelrohr zugewandte Rand 34 des Messerarms 13 konkav ausgebildet ist, damit er beim Aufschneiden nicht auf der Mantelrohrfläche aufliegt.

## Patentansprüche

1. Vorrichtung zum Aufschneiden von Schutzmantelrohren, welche Vorrichtung einen Messerhalter (11) umfasst, an dem ein Messer (22) gehalten ist und der an dem freien Ende (12) eines Messerarms (13) gehalten ist, an dessen anderen Ende (14) ein verzahntes Antriebsrad (15) drehbar gelagert ist, das in der Gebrauchslage auf dem Schutzmantelrohr aufliegt derart, dass die Zähne (17) des Antriebsrads (15) in das Material des Schutzmantels eingreifen, welches Antriebsrad (15) um seine Drehachse (16) mit einem Hebel (18) verdrehbar ist, um den Messerhalter (11) entlang der Oberfläche des Schutzmantelrohrs zu bewegen, so dass das Messer (22) den Schutzmantel entlang dem Umfang oder in axialer Richtung aufschneidet, **dadurch gekennzeichnet, dass** an dem Messerhalter (11) zwei beabstandete und parallele Messer (22) vorhanden sind, die im Zuge der Bewegung der Vorrichtung auf dem Schutzmantelrohr einen Streifen aus dem Schutzmantel herausschneiden.

2. Vorrichtung nach Anspruch 1, **dadurch gekennzeichnet, dass** der Abstand der Messer zwischen 0,2 cm und 2 cm oder 0,5 cm und 1 cm beträgt.

3. Vorrichtung nach Anspruch 1 oder 2, **dadurch gekennzeichnet, dass** der Messerhalter (11) um eine parallel zur Drehachse (16) des Antriebsrads (15) verlaufende Schwenkachse (24) verschwenkbar am Messerarm (13) gehalten ist.

4. Vorrichtung nach einem der Ansprüche 1 bis 3, **dadurch gekennzeichnet, dass** die Messer (22) als Hakenklinge ausgebildet sind, deren hakenförmige Messerspitze (25) in Richtung auf das Antriebsrad (15) weist.

5. Vorrichtung nach einem der Ansprüche 1 bis 4, **dadurch gekennzeichnet, dass** zwei gleichartige Antriebsräder (15) parallel und mit einem Abstand zueinander auf der Drehachse (16) angeordnet sind.

6. Vorrichtung nach einem der Ansprüche 1 bis 5, **dadurch gekennzeichnet, dass** die Drehachse (16) zumindest in dem Bereich des Antriebsrades oder der Antriebsräder (15) einen Vierkant-Querschnitt aufweist, und das Antriebsrad beziehungsweise die Antriebsräder (15) drehfest mit der Drehachse (16) verbunden ist beziehungsweise sind.

7. Vorrichtung nach Anspruch 6, **dadurch gekennzeichnet, dass** der Hebel (18) als Durchsteckratsche ausgebildet ist, dass der Ratschenkopf (19) zwischen den Antriebrädern (15) verläuft, und dass sich der Bereich der Drehachse mit dem Vierkant-Querschnitt von der Außenseite des einen Antriebsrads (15) bis zur Außenseite des anderen Antriebsrads (15) erstreckt.

8. Vorrichtung nach einem der Ansprüche 1 bis 7, **dadurch gekennzeichnet, dass** der Messerarm (13) zwei zumindest bereichsweise parallel zueinander verlaufende Teilarme (31) aufweist, die in der montierten Lage den Messerhalter (11) zwischen sich einschließen.

9. Vorrichtung nach Anspruch 8, **dadurch gekennzeichnet, dass** die Teilarme (31) in der montierten Lage das Antriebsrad beziehungsweise die Antriebsräder (15) zwischen sich einschließen.

10. Vorrichtung nach einem der Ansprüche 1 bis 9, **dadurch gekennzeichnet, dass** der Messerarm (13) haubenförmig ausgebildet ist und in der montierten Lage den Messerhalter (11) und die Antriebsräder (15) zumindest bereichsweise und zumindest von oben überdeckt.

11. Vorrichtung nach einem der Ansprüche 3 bis 10, **dadurch gekennzeichnet, dass** der Messerhalter (11) exzentrisch zur Schwenkachse (24) angeordnete Durchbrechungen (29) oder Vorsprünge aufweist, um den Messerhalter in einer vorbestimmbaren Winkellage zum Messerarm (13) zu arretieren.
